Europäisches Patentamt

European Patent Office

Office européen des brevets

(11) Veröffentlichungsnummer: **0 332 067 B1**

(12) **EUROPÄISCHE PATENTSCHRIFT**

(45) Veröffentlichungstag der Patentschrift: **14.10.92**

(21) Anmeldenummer: **89103733.5**

(22) Anmeldetag: **03.03.89**

(51) Int. Cl.⁵: **B01D 1/16**, C08J 3/16, C08L 33/00

(54) **Verfahren zur Herstellung sprühgetrockneter Emulsionspolymerisate.**

(30) Priorität: **08.03.88 DE 3807543**

(43) Veröffentlichungstag der Anmeldung:
**13.09.89 Patentblatt 89/37**

(45) Bekanntmachung des Hinweises auf die
Patenterteilung:
**14.10.92 Patentblatt 92/42**

(84) Benannte Vertragsstaaten:
**AT BE CH DE ES FR GB IT LI NL SE**

(56) Entgegenhaltungen:
**WO-A-83/02567**
**DE-B- 2 512 238**
**GB-A- 576 505**

(73) Patentinhaber: **Röhm GmbH**
**Kirschenallee Postfach 4242**
**W-6100 Darmstadt 1(DE)**

(72) Erfinder: **Rauch, Hubert**
**Odenwaldstrasse 6**
**W-6108 Weiterstadt 1(DE)**
Erfinder: **Arndt, Peter Joseph, Dr.**
**Im Säbchen 9**
**W-6104 Seeheim-Jugenheim(DE)**

EP 0 332 067 B1

**Beschreibung**

Gebiet der Erfindung

Die Erfindung betrifft ein Verfahren zur Herstellung von sprühgetrockneten Polymerisatpulvern durch Zerstäuben einer wäßrigen Dispersion oder Lösung eines Polymerisats in einem Warmluftstrom und Abscheiden des Polymerisatpulvers aus dem Warmluftstrom.

Stand der Technik

Es ist bekannt, pulverförmige Emulsionspolymerisate durch Sprühtrocknen von wäßrigen Polymerisatdispersionen herzustellen. Dabei hat sich eine sorgfältige Temperatursteuerung im Sprühturm als vorteilhaft erwiesen, um unverglaste Polymerisatpulver oder Pulver aus Dispersionen von niedriger Mindestfilmbildungstemperatur (MFT) zu erzeugen.

In der DE-C 25 12 238 wird die Herstellung eines pulverförmigen Acrylharzes mit hohem Carboxylgruppengehalt durch Sprühtrocknen einer wäßrigen Dispersion beschrieben. Es wird dort als wesentlich bezeichnet, beim Verfahren der Sprühtrocknung die MFT nicht zu überschreiten.

Wäßrige Polymerisatdispersionen mit hohen Feststoffgehalten von beispielsweise 40 bis 60 Gew.-% sind empfindliche Systeme, die bei erhöhten Temperaturen oder unter der Einwirkung von Scherkräften zur Bildung von Ablagerungen und Koagulaten neigen. Das gilt in verstärktem Maße für Dispersionen mit einer niedrigen MFT, beispielsweise unter 60 Grad C, und für Dispersionen von Emulsionspolymerisaten mit einer niedrigen dynamischen Einfriertemperatur T(lambda-max). Wegen dieser Empfindlichkeit treten beim Sprühtrocknen wäßriger Polymerisatdispersionen häufig erhebliche Schwierigkeiten auf. Beim Auffließen auf die schnell rotierende Zerstäuberscheibe wird die Dispersion durch Reibungskräfte erhitzt und starken Scherkräften ausgesetzt. Ablagerungen im Flüssigkeitsverteiler und auf der Zerstäuberscheibe der Sprühtrocknungsanlage sind die Folge.
Ähnliche Schwierigkeiten treten bei der Sprühtrocknung von wäßrigen Polymerisatlösungen auf.

Aufgabe und Lösung

Der Erfindung liegt die Aufgabe zugrunde, die genannten Schwierigkeiten bei der Zerstäubung von wäßrigen Dispersionen und Lösungen zu vermeiden, insbesondere beim Sprühtrocknen von temperatur- und scherempfindlichen Dispersionen mit einer MFT unter 60 Grad C und einer dynamischen Einfriertemperatur des Emusionspolymerisats unter 150 Grad C.

Es wurde gefunden, daß die gestellte Aufgabe dadurch gelöst wird, daß zusammen mit der Dispersion oder der Lösung, gleichzeitig, aber getrennt von einander, Wasser zerstäubt wird. Dadurch werden Polymerisatablagerungen im Flüssigkeitsverteiler und in der Zerstäubungsvorrichtung verhindert. Dies wird nicht durch einen Verdünnungseffekt bewirkt, denn ein Zusatz von Wasser zu der Dispersion oder der Lösung selbst hat keine entsprechende Wirkung. Es ist eher anzunehmen, daß das Wasser kühlend wirkt und temperaturbedingte Koagulations-und Ablagerungsprozesse verhindert. Soweit doch kleine Mengen von Ablagerungen entstehen, lassen sie sich leichter wieder entfernen, als wenn sie in Abwesenheit von zusätzlichem Wasser entstanden sind.

Ausführung der Erfindung

Die Dispersion bzw. die Lösung wird in technischen Sprühtrocknungsanlagen bevorzugt mittels einer schnell rotierenden Scheibe zerstäubt. Die bevorzugte Umdrehungszahl der Scheibe liegt meistens im Bereich von 5000 bis 25000 Upm. Es ist zweckmäßig, die Dispersion oder die Lösung und das Wasser gleichzeitig, aber getrennt voneinander auf die schnell rotierende Scheibe auffließen zu lassen. Zu diesem Zweck wird die Zerstäubungsanlage mit einer oder mehreren zusätzlichen Leitungen ausgerüstet, so daß sich eine oder mehrere Austrittsöffnungen im Flüssigkeitsverteiler unmittelbar über der Zerstäuberscheibe befinden und das Wasser unmittelbar, aber getrennt von der Dispersion oder Lösung auf die Zerstäuberscheibe auffließen kann.

Die Menge des pro Zeiteinheit zugegebenen Wassers ist in der Regel kleiner als die in der gleichen Zeiteinheit zerstäubte Dispersions- bzw. Lösungsmenge, beispielsweise 1 bis 20 Gew.%. Vorzugsweise werden 2,5 bis 7,5 % Wasser, jeweils bezogen auf das Gewicht der Dispersion oder der Lösung, eingesetzt. Die Wirkung des Wassers wird im allgemeinen nicht beeinträchtigt, wenn es begrenzte Mengen an gelösten oder dispergierten Inhaltsstoffen enthält, sofern sie nicht deutlich viskositätserhöhend wirken oder mit der Dispersion oder Lösung unerwünschte Wechselwirkungen hervorrufen. Mögliche Inhaltsstoffe sind z.B. Tenside und nichtflüchtige Zusätze, die zur Modifizierung des Polymerisatpulvers dienen.

Der Luftstrom wird im Trockenturm üblicherweise im Gleichstrom mit der eingesprühten Dispersion oder Lösung von oben nach unten durch den Trockenturm geleitet. Vom Ausgang des Trokkenturms wird der Luftstrom in einen oder mehrere Zyklonabscheider geleitet, wo das trockene Polymerisatpulver abgetrennt wird. Es enthält meistens eine Restfeuchte zwischen 1 und 5 Gew.-%.

Die in den Trockenturm eingeleitete Luft hat in der Regel eine Temperatur im Bereich von 50 bis 200 Grad C, vorzugsweise von 60 bis 120 Grad C. Die Lufttemperatur nimmt infolge der zur Verdunstung des Wassers aufgewandten Energie von oben nach unten ab und tritt mit 30 bis 100, vorzugsweise 30 bis 50 Grad C aus. Die Differenz zwischen der Ein- und Austrittstemperatur (T-E/T-A) hängt von dem Verhältnis von Luft zu versprühter Dispersion ab und ist durch dieses Verhältnis regelbar.

Gemäß einer bevorzugten Ausführungsform der Erfindung wird die Dispersion durch Sprühtrocknung bei einer Eingangstemperatur T-E unterhalb der dynamischen Einfriertemperatur, aber oberhalb der MFT und einer Austrittstemperatur T-A unter 65 Grad C, aber oberhalb der MFT eingetrocknet. Weiterhin ist es bevorzugt, daß das Mengenverhältnis der bei der Sprühtrocknung eingeführten Trockenluft zur eingesprühten Dispersion so eingestellt wird, daß sich eine Differenz zwischen der Eingangs- und der Ausgangstemperatur (T-E - T-A) nicht über 65 Grad C ergibt.

Die wäßrige Dispersion

Werden beim Verfahren der Erfindung Dispersionen eingesetzt, so sollten sie zweckmäßig einen möglichst hohen Feststoffgehalt haben. Er kann zwischen 10 und 60, vorzugsweise zwischen 20 und 50 Gew.-% liegen. Um die Dispersion zu feinen Tröpfchen versprühen zu können, sollte ihre Viskosität nicht über 4000 mPa s liegen. Vorteilhaft ist eine Viskosität unter 1000, insbesondere unter 100 mPa s.

In der Regel enthält die Dispersion einen anionischen Emulgator, beispielweise in einer Konzentration von 0,03 bis 3 %, bez. auf das Gewicht der Wasserphase. Daneben können nichtionische Emulgatoren enthalten sein, beispielsweise bis zu 5 Gew.-%, die gegebenenfalls auch als alleinige Emulgiermittel vorhanden sein können.

Die zur Sprühtrocknung eingesetzten Dispersionen können nach bekannten Verfahren hergestellt worden sein. Wenn auch die Erfindung bei der Sprühtrocknung jeder Dispersion eines sprühtrockenbaren Emulsionspolymerisats mit Vorteil eingesetzt werden kann, wird man es in der Praxis wegen des entsprechend dem Wasserzusatz erhöhten Energiebedarfs nur in solchen Fällen anwenden, in denen sich die Dispersion ohne den Wasserzusatz nur mit Schwierigkeiten oder gar nicht sprühtrocknen ließe.
Zu den schwierig versprühbaren Dispersionen, die besonders vorteilhaft durch das Verfahren der Erfindung verarbeitet werden, gehören solche, deren Mindestfilmbildungstemperatur (MFT) mindestens 50 Grad C unter der dynamischen Einfriertemperatur liegt; besonders solche, deren MFT unter 60 Grad C liegt. Die dynamische Einfriertemperatur T-(lambda-max) liegt vorzugsweise unter 150 Grad C.

Eine Gruppe von Dispersionen, auf die die obigen Merkmale in der Regel zutreffen, enthält Emulsionspolymerisate aus 20 bis 70 Gew.-% Einheiten der Acryl- oder/und Methacrylsäure, 40 bis 80 Gew.-% Einheiten niederer Alkylester der Acryl- und/oder Methacrylsäure oder deren Gemisch mit Styrol sowie gegebenenfalls bis zu 10 Gew.-% Einheiten von weiteren ungesättigten, radikalisch polymerisierbaren Comonomere.

Wäßrige Lösungen

von wasserlöslichen Polymerisaten lassen sich ebenfalls vorteilhaft nach dem Verfahren der Erfindung sprühtrocknen. Typische Polymerisate dieser Art sind zu wenigstens 50 Gew.-% aus Acrylsäure oder Methacrylsäure oder deren wasserlöslichen Salzen und gegebenenfalls zum übrigen Teil aus anderen damit mischpolymerisierbaren Monomeren, wie Acryl- oder Methacrylamid, Acryl- oder Methacrylnitril, Alkylestern oder Hydroxyalkylestern der Acryl- oder Methacrylsäure, aufgebaut. Die untere Grenze des Gehalts an Acryl- oder Methacrylsäure ist nur durch die Wasserlöslichkeit gegeben.

Wäßrige PolymerisatLösungen sind versprühbar, wenn ihre Viskosität nicht über 2 000 mPa s und vorzugsweise unter 500 mPa s liegt. Die Lösungsviskosität hängt vom Molekulargewicht und vom Feststoffgehalt, bei Polyelektrolyten auch vom Salzgehalt der Lösung ab. Lösungen der Polyacrylsäure mit einem Molekulargewicht unter 2 000 lassen sich noch bei Feststoffgehalten bis zu 50 Gew.-% versprühen, während bei einem Molekulargewicht von 50 000 nur noch Konzentrationen bis zu 30 Gew.-% verarbeitbar sind.

Das sprühgetrocknete Polymerisatpulver besteht in der Regel aus Pulverkörnchen einer mittleren Größe von etwa 50 Mikrometer. Im mikroskopischen Bild erscheinen die Körnchen bei 100-facher Vergrößerung scharf begrenzt und trüb bis klar durchscheinend, was auf eine mehr oder weniger starke Verglasung oder Verschmelzung der Latexteilchen schließen läßt.

Die Polymerisatpulver eignen sich beispielsweise zur Herstellung von Arzneimittelüberzügen oder als Verdickungsmittel für wäßrig-alkalische Medien.

BEISPIELE

Beispiel 1

Eine wäßrige Kunststoffdispersion mit einem Feststoffgehalt von 30 Gew.-%, die ein dispergiertes Copolymerisat aus 50 Gew.-% Äthylacrylat und 50 Gew.-% Methacrylsäure mit einer mittleren Teilchengröße von 100 nm und 2,4 Gew.-% eines anionischen Emulgators (Hostapal BV konz, eingetr. Warenzeichen der Hoechst AG) enthält und auf pH 2,6 eingestellt war, wurde zur Sprühtrocknung eingesetzt. Die Dispersion hatte eine Viskosität von 6 mPa s, eine Mindestfilmbildungstemperatur von 28 Grad C und einen Weißpunkt von 17 Grad C. Das dispergierte Copolymerisat hatte eine dynamische Einfriertemperatur ($T_{lambda-max}$) von 134 Grad C und einen Schubmodul von 1650 N/mm$^2$ bei 20 Grad C.

Zum Sprühtrocknen wurde ein Sprühturm eingesetzt, der am Kopf eine mit 10.000 Upm rotierende Zerstäuberscheibe enthielt und im Gleichstrom mit dem Sprühgut von oben nach unten mit 18.000 cbm/h Heißluft von 80 bis 90 Grad C durchströmt wurde.

Über eine Rohrleitung am Kopf des Sprühturms wurden 190 kg/h der wäßrigen Dispersion auf die Zerstäuberscheibe geleitet. Über eine zweite Rohrleitung wurden gleichzeitig 8 - 10 kg/h Wasser auf die Zerstäuberscheibe geleitet. Am Fuß des Sprühturmes wurde aus dem Luftstrom bei einer Temperatur von 40 - 50 Grad C das getrocknete Copolymerisat in Form eines feinteiligen Pulvers abgetrennt.

Wurde die Dispersion mit der gleichen Menge Wasser verdünnt oder das Wasser ganz weggelassen, so bildeten sich nach kurzer Betriebszeit auf der Zerstäuberscheibe Ablagerungen, die sich durch Reibung an den stehenden Teilen des Zerstäubungsaggregates erhitzten und verkohlten, so daß das Produkt mit verkohlten Teilchen verunreinigt war.

Beispiel 2

Eine wäßrige Lösung eines Copolymerisats aus 85 Gew.-% Acrylsäure und 15 Gew.-% Äthylacrylat mit einem Molekulargewicht (Gew.-Mittel) von 1700 bis 2000, einem Feststoffgehalt von 49 Gew.-%, einem pH-Wert von 1,5 und einer Viskosität von 210 mPa s wurde zur Sprühtrocknung eingesetzt.

Es wurde eine Sprühtrocknunganlage verwendet, die eine mit 20.000 Upm rotierende Zerstäuberscheibe enthielt und im Gleichstrom mit dem Sprühgut von oben nach unten mit 1000 cbm/h Heißluft von 65 - 70 Grad C durchströmt wurde. Die Luftaustrittstemperatur lag bei 40 - 45 Grad C.

Über getrennte Rohrleitungen wurden stündlich 120 kg der Lösung sowie 3 - 4 kg Wasser auf die Zerstäuberscheibe auffließen gelassen. Am Fuß der Anlage wurde ein feines weißes Polymerisatpulver gewonnen. Wurde die Lösung mit der gleichen Wassermenge verdünnt oder der Wasserzusatz ganz weggelassen, entstanden nach kurzer Zeit Störungen der im Beispiel 1 beschriebenen Art.

Beispiel 3

Es wurde wie im Beispiel 2 verfahren, jedoch wurden 100 kg/h einer wäßrige Lösung von Natriumpolyacrylat (Mol.-Gew. 1700 - 2000) mit einem pH-Wert von 7,5 und einer Viskosität von 133 mPa s unter sonst gleichen Verfahrensbedingungen eingesetzt. Das Ergebnis entsprach demjenigen des vorhergehenden Beispiels.

**Patentansprüche**

1. Verfahren zur Herstellung sprühgetrockneter Polymerisatpulver durch Zerstäuben einer wäßrigen Dispersion oder Lösung eines Polymerisats in einem Warmluftstrom und Abscheiden des Polymerisatpulvers aus dem Warmluftstrom,
   dadurch gekennzeichnet,
   daß zusammen mit der Dispersion oder der Lösung gleichzeitig, aber getrennt voneinander, Wasser zerstäubt wird.

2. Verfahren nach Anspruch 1, dadurch gekennzeichnet, daß die Dispersion oder die Lösung und das Wasser mittels einer schnell rotierenden Scheibe zerstäubt werden.

3. Verfahren nach Anspruch 2, dadurch gekennzeichnet, daß die Dispersion oder die Lösung und das Wasser gleichzeitig, aber getrennt voneinander auf die schnell rotierenden Scheibe auffließen gelassen werden.

4. Verfahren nach einem der Ansprüche 1 bis 3, dadurch gekennzeichnet, daß die je Zeiteinheit zerstäubte Wassermenge kleiner als die Menge der Dispersion oder der Lösung ist.

5. Verfahren nach einem oder mehreren der Ansprüche 1 bis 4, dadurch gekennzeichnet, daß eine filmbildende Dispersion mit einer Mindestfilmbildungstemperatur MFT unter 60 Grad C eingesetzt wird.

6. Verfahren nach Anspruch 5, dadurch gekennzeichnet, daß eine Dispersion eines Emulsionspolymerisats mit einer dynamischen Einfriertemperatur T(lambda-max) unter 150 Grad C eingesetzt wird.

7. Verfahren nach einem oder mehreren der Ansprüche 1 bis 6, dadurch gekennzeichnet, daß eine wäßrige Dispersion eines Polymerisats aus 20 bis 70 Gew.-% Einheiten der Acryl- oder/und Methacrylsäure bzw. ihrer wasserlöslichen Salze, 40 bis 80 Gew.-% Einheiten niederer Alkylester der Acryl- und/oder Methacrylsäure oder deren Gemisch mit Styrol sowie gegebenenfalls bis zu 10 Gew.-% Einheiten von weiteren ungesättigten, radikalisch polymerisierbaren Comonomeren eingesetzt wird.

8. Verfahren nach einem oder mehreren der Ansprüche 1 bis 7, dadurch gekennzeichnet, daß eine Kunststoffdispersion eingesetzt wird, deren Mindestfilmbildungstemperatur (MFT) mindestens 50 Grad C unter der dynamischen Einfriertemperatur liegt.

9. Verfahren nach einem oder mehreren der Ansprüche 5 bis 7, dadurch gekennzeichnet, daß die Dispersion durch Sprühtrocknung bei einer Eingangstemperatur T-E unterhalb der dynamischen Einfriertemperatur des Polymerisats, aber oberhalb der MFT und einer Austrittstemperatur T-A unter 65 Grad C, aber oberhalb der MFT eingetrocknet wird.

10. Verfahren nach einem oder mehreren der Ansprüche 1 bis 6, dadurch gekennzeichnet, daß eine wäßrige Lösung eines Polymerisats aus wenigstens 50 Gew.-% Acryl- oder Methacrylsäure oder deren wasserlöslichen Salzen und gegebenenfalls zum übrigen Teil aus anderen, damit mischpolymerisierbaren Monomeren eingesetzt wird.

11. Verfahren nach einem oder mehreren der Ansprüche 1 bis 10, dadurch gekennzeichnet, daß das Mengenverhältnis der bei der Sprühtrocknung eingeführten Trockenluft zur eingesprühten Dispersion oder Lösung so eingestellt wird, daß sich eine Differenz zwischen der Eingangs- und der Ausgangstemperatur (T-E -T-A) nicht über 65 Grad C ergibt.

**Claims**

1. A process for preparing spray-dried polymer powders by atomising an aqueous dispersion or solution of a polymer in a hot air stream and separating the polymer powder from the hot air stream, characterised in that water is atomised simultaneously with the dispersion or solution, but separately therefrom.

2. A process according to claim 1, characterised in that the dispersion or solution and the water are atomised by means of a quickly rotating disc.

3. A process according to claim 2, characterised in that the dispersion or solution and the water are allowed to flow simultaneously, but separately from one another, onto the quickly rotating disc.

4. A process according to claims 1 to 3, characterised in that the amount of water atomised per time unit is smaller than the amount of dispersion or solution.

5. A process according to one or more of claims 1 to 4, characterised in that a film-forming dispersion with a minimum film-forming temperature MFT below 60°C is used.

6. A process according to claim 5, characterised in that a dispersion of an emulsion polymer with a dynamic freezing temperature T (lambda-max) below 150°C is used.

7. A process according to one or more of claims 1 to 6, characterised in that an aqueous dispersion of a polymer is used which is synthesised from 20 to 70 wt.% of units of acrylic and/or methacrylic acid or the water-soluble salts thereof, 40 to 80 wt.% of units of lower alkyl esters of acrylic and/or methacrylic acid or mixtures thereof with styrene and, optionally, up to 10 wt.% of units of further unsaturated, radically polymerisable comonomers.

8. A process according to one or more of claims 1 to 7 characterised in that a plastics dispersion is used, the minimum film-forming temperature (MFT) of which is at least 50°C below the dynamic freezing temperature.

9. A process according to one or more of claims 5 to 7, characterised in that the dispersion is dried by spray-drying at an inlet temperature T-E below the dynamic freezing temperature of the polymer, but above the MFT, and an outlet temperature T-A below 65°C, but above the MFT.

10. A process according to one or more of claims 1 to 6, characterised in that an aqueous solution of a polymer is used consisting of at least 50 wt.% of acrylic or methacrylic acid or the water-soluble salts thereof and, optionally for the remaining portion, of other monomers copolymerisable therewith.

11. A process according to one or more of claims 1 to 10, characterised in that the quantitative ratio between the drying air, introduced for spray-drying, and the sprayed-in dispersion is adjusted so that there is a difference between the inlet and outlet temperature (T-E - T-A) of not more than 65°C.

**Revendications**

1. Procédé de préparation de poudre de polymère séchée par pulvérisation, par pulvérisation d'une dispersion ou solution aqueuse d'un polymère dans un courant d'air chaud et séparation de la poudre de polymère d'avec le courant d'air chaud, caractérisé en ce que de l'eau est pulvérisée avec la dispersion ou la solution, en même temps que celle-ci mais séparément.

2. Procédé selon la revendication 1, caractérisé en ce que la dispersion ou la solution et l'eau sont pulvérisées au moyen d'un disque tournant rapidement.

3. Procédé selon la revendication 2, caractérisé en ce qu'on fait couler la dispersion ou la solution et l'eau en même temps, mais séparément l'une de l'autre, sur le disque tournant rapidement.

4. Procédé selon l'une quelconque des revendications 1 à 3, caractérisé en ce que la quantité d'eau pulvérisée par unité de temps est plus petite que la quantité de la dispersion ou de la solution.

5. Procédé selon l'une ou plusieurs des revendications 1 a 4, caractérisé en ce que la dispersion traitée est une dispersion filmogène ayant une température minimale de formation du film TMF inférieure à 60°C.

6. Procédé selon la revendication 5, caractérisé en ce que la dispersion traitée est une dispersion d'un produit de polymérisation en émulsion ayant une température de solidification dynamique $T_{\lambda max}$ inférieure à 150°C.

7. Procédé selon l'une ou plusieurs des revendications 1 à 6, caractérisé en ce que la dispersion traitée est une dispersion aqueuse d'un polymère de 20 à 70% en poids de motifs acide acrylique et/ou méthacrylique ou de leurs sels hydrosolubles, de 40 à 80% en poids de motifs acrylate et/ou méthacrylate d'alkyle inférieur ou de mélange de ceux-ci avec du styrène, et éventuellement de 10% en poids au maximum d'autres comonomères insaturés, susceptibles de polymérisation radicalaire.

8. Procédé selon l'une ou plusieurs des revendications 1 à 7, caractérisé en ce que la dispersion traitée est une dispersion de matière plastique dont la température minimale de formation du film (TMF) se situé au moins à 50°C au-dessous de la température de solidification dynamique.

9. Procédé selon l'une ou plusieurs des revendications 5 à 7, caractérisé en ce que la dispersion est séchée par séchage par pulvérisation à une température d'entrée T-E inférieure à la température de solidification dynamique du polymère, mais supérieure à sa TMF, et à une température de sortie T-S inférieure à 65°C, mais supérieure à la TMF.

10. Procédé selon l'une ou plusieurs des revendications 1 à 6, caractérisé en ce que la solution traitée est une solution aqueuse d'un polymère d'au moins 50% en poids d'acide acrylique ou méthacrylique ou de sels hydrosolubles de celui-ci et éventuellement, pour la partie restante, d'autres monomères copolymérisables avec ceux-ci.

11. Procédé selon l'une quelconque des revendications 1 à 10, caractérisé en ce que le rapport quantitatif de l'air sec envoyé dans le séchage par pulvérisation à la dispersion ou solution pulvérisée est réglé de telle sorte qu'il n'y ait pas, entre la température d'entrée et la température de sortie (T-E - T-S), une diférence supérieure à 65°C.